# EUROPEAN PATENT APPLICATION

(11) **EP 4 807 901 A1**
(43) Date of publication of application: **16.09.2026**
(21) Application number: 25163607.2
(22) Date of filing: 13.03.2025
(51) Int. Cl.: H01R 4/30, F16B 33/00, H01H 50/14, H01R 9/24

(54) **THREADED PART, AND CONTACTOR**

(71) Applicant: ABB SCHWEIZ AG, 5400 Baden (CH)
(72) Inventor: Granier, Yoann, 38200 Vienne (FR); Gozukara, Mikayil, 69120 Vaulx-en-Velin (FR)
(74) Representative: AOMB Polska Sp. z.o.o.

(57) **Abstract**

The present invention relates to threaded part (10) and contactor (30). The threaded part (10) for use with a contactor terminal screw, comprising: a body (1) comprising a first side (1.1) and a second side (1.2) opposite to the first side (1.1), a threaded hole (2) extending perpendicularly through the body (1) from the first side (1.1) to the second side (1.2), and at least one groove (3) formed in the body (1). The body (1) is configured to fit into a contactor pocket with the first side (1.1) oriented toward the terminal screw, and the threaded hole (2) oriented toward the terminal screw, and the at least one groove (3) extends from the first side (1.1) toward the second side (1.2) of the body (1) such that a depth of the at least one groove (3) is smaller than a thickness of the body (1) and the at least one groove (3) extends over at least a thread of the threaded hole (2). The contactor (30) comprises an at least one screw connecting terminal (32) comprises a threaded part (10) according to the first invention,

## Description

### Technical field

The present invention relates to a threaded part, particularly intended to work with screw terminals in contactors, and a contactor with the threaded part.

### Background of the disclosure

The threaded components are integrated into the contactor covers and serve as the attachment points for terminal screws. They can be either molded directly into the covers or designed as separate inserts. These inserts are specifically shaped to fit into designated terminal pockets within the cover. Some embodiments incorporating expansion or locking elements to secure the insert in position. However, the threaded parts known from the prior art have a rigid body. This rigidity may lead to assembly-related issues, particularly in cases of misalignment during installation.

When wire ferrules are improperly positioned, terminal screws intended to engage with the threaded part may encounter significantly increased resistance during installation. As a result, an unintended increase in assembly force can cause the combination of the threaded part and the terminal screw to transfer excessive loads to the surrounding assembly, often resulting in damage to individual components during the assembly process.

A mere reduction in the load capacity of a threaded part does not present a viable solution. In assembly conditions where elevated forces are exerted, such a modification may compromise the structural integrity of the insert, potentially leading to its deformation or failure. Additionally, a weakened insert may be unable to sustain the required preload of the connection, thereby undermining its intended function. Consequently, this could result in mechanical failures that disrupt the reliable operation of the contactor.

The present invention seeks to resolve this contradiction by providing an improved solution.

### Summary of the disclosure

It is a goal of this invention to provide an improved threaded part solution that mitigates the effects of excessive assembly forces while maintaining secure and reliable ferrule attachment to the contactor.

According to an aspect of the present invention there is provided a threaded part for use with a contactor terminal screw, comprising:
a body comprising a first side and a second side opposite to the first side, a threaded hole extending perpendicularly through the body from the first side, and an at least one groove formed in the body, wherein the body is configured to fit into a terminal pocket with the first side oriented toward the terminal screw, and the threaded hole oriented toward the terminal screw, and the at least one groove extends from the first side toward the second side of the body such that a depth of the at least one groove is smaller than a thickness of the body, and the at least one groove extends over at least a thread of the threaded hole.

Preferably the at least one groove extends over an entire width of the body crossing the threaded hole.

Preferably the at least one groove is aligned symmetrically with the threaded hole and the body.

Preferably the threaded hole is positioned in the centre of the body.

Preferably the depth of the at least one groove is greater than 50% of the thickness of the body.

In one embodiment the threaded hole comprises at least one recess extending from the first side toward the second side of the body and extends over at least part of a thread of the threaded hole.

In one of the preferred embodiments the body comprises an expanding element extending beyond the first side of the body and configured to expand within the terminal pocket.

Preferably two recesses are positioned on opposite sides of the threaded hole such that an angle between the recess and each of the at least one groove is 90 degrees.

The subject-matter of the invention also provides contactor comprising an insulating body comprising a cover, an operating coil housed in the insulating body, means of modular connection of the coilto an external circuit so that the coil may be powered, at least a pair of screw connecting terminals, and an at least one of screw connecting terminals comprising a terminal screw, a fixed contact, and a threaded part according to disclosure provided above. The insulation body comprises a terminal pocket, and the threaded part is positioned in the terminal pocket.

Preferably the threaded part is in form of an insert, and the body is configured to fit into the terminal pocket, and the threaded hole is oriented perpendicular to the direction in which the threaded part slides into the terminal pocket.

Preferably the threaded part is molded into the terminal pocket.

Preferably the cover comprises the terminal pocket, and the threaded part is a single part with the cover.

### Advantages of the disclosure

The present inventions address the challenge of providing a threaded part that is capable of withstanding the preload of the terminal screw, while also being structurally designed to minimize the risk of damage to the contactor in the event of excessive mounting force, which may result from improper installation of the ferrule. The proposed solution introduces a novel approach utilizing a compliant threaded part design, which achieves its compliance along the axis of an applied groove. During assembly, if the terminal screw applies excessive force against the threaded part, the threaded part can "open," releasing the threaded connection. Conversely, during the unscrewing, under reverse forces-when preload exists in the threaded connection-the insert's compliance allows it to clamp against the terminal screw. This results in a significant difference in the connection's load-bearing capacity between the screwing and unscrewing directions.

The proposed solutions regarding the geometry and positioning of the groove are particularly advantageous. The insert can maintain the desired compliance when there is sufficient space within the terminal pocket to allow for deformation. Such space can be provided by design, for example, by incorporating recesses in the terminal pocket in areas where controlled deformation is intended. Alternatively, expansion elements can be integrated into the insert, as described above. Likewise, similar expansion elements may be applied on the terminal pocket side to achieve the same effect.

The clamping effect of the threaded part may be excessive during screwing process. The force required to screw the system together may become excessively high. The solution to this problem involves incorporating recesses in the thread, specifically in areas where the thread would be particularly prone to jamming.

### Brief description of the drawings

The present disclosure will be discussed with reference to drawings, where:
Fig. 1 - depicts a prior art threaded part.
Fig. 2 - depicts a contactor with prior art threaded part damaged during installation.
Fig. 3 - depicts a contactor with coaxially positioned ferrule.
Fig. 4 - depicts a contactor with misaligned ferrule.
Fig. 5 - depicts a first view showing a groove of threaded part.
Fig. 6 - depicts a second view showing recesses of threaded part.
Fig. 7 - depicts a cross section of contactor with misaligned ferrule.
Fig. 8- depicts forces in the threaded connection from Fig. 7.
Fig. 9- depicts a cross section of contactor during unscrewing.
Fig. 10 - depicts forces in the threaded connection from Fig. 9.
Fig. 11 - depicts a direction of threaded part deflection in the situation of misaligned ferrule during installation.
Fig. 12 - depicts a direction of threaded part deflection during unscrewing.

### Detailed description of the disclosure

It is noted that in the description of the figures, same reference numerals refer to the same of similar components performing a same of essentially similar function.

For a proper understanding of the disclosure, in the detailed description below, corresponding elements or parts of different embodiments will be denoted with identical reference numerals in the drawings. It is noted that the drawings only illustrate typical examples and are therefore not to be considered to limit the scope of the subject matter of the claims. The drawings are incorporated for facilitating an understanding of the disclosure and are thus not necessarily drawn to scale. Advantages of the subject matter as claimed will become apparent to those skilled in the art upon reading the description in conjunction with the accompanying drawings.

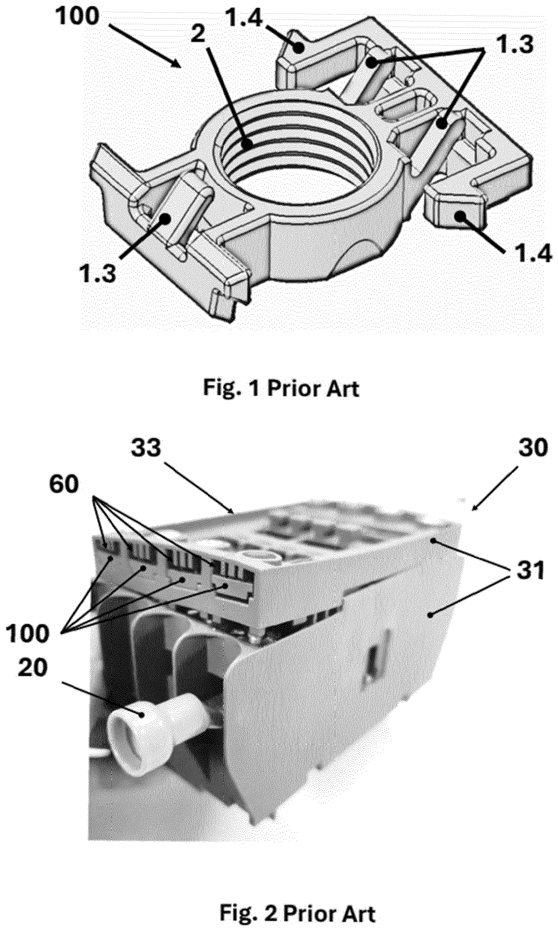

Fig. 1 depicts a prior art threaded part 100. The threaded hole 2 is positioned near the center of a body 1. The body 1 is rigid, shaped to fit a terminal pocket 60 of a screw connecting terminal 32 in a contactor 30. The body 1 comprises expanding elements 1.3 and locking elements 1.4.

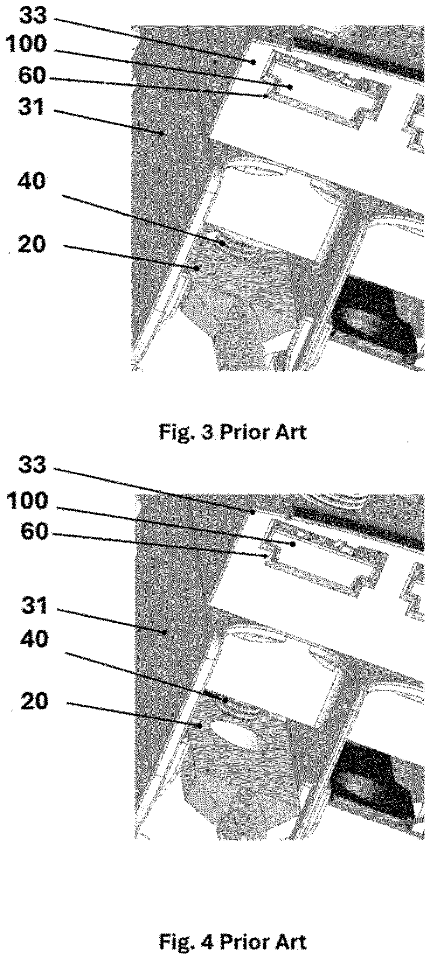

Fig. 2 depicts a contactor 30, with the prior art threaded parts 100, damaged during installation. The forces in the threaded connection exceeded the strength of the components, causing permanent deformations. This was due to the misalignment of a ferrule 20, which led to a terminal screw 40 blocking on it. Fig. 4 depicts visualisation of this. Comparatively, in Fig. 3 depicts a correct position of the ferrule 20 on a fixed contact 70.

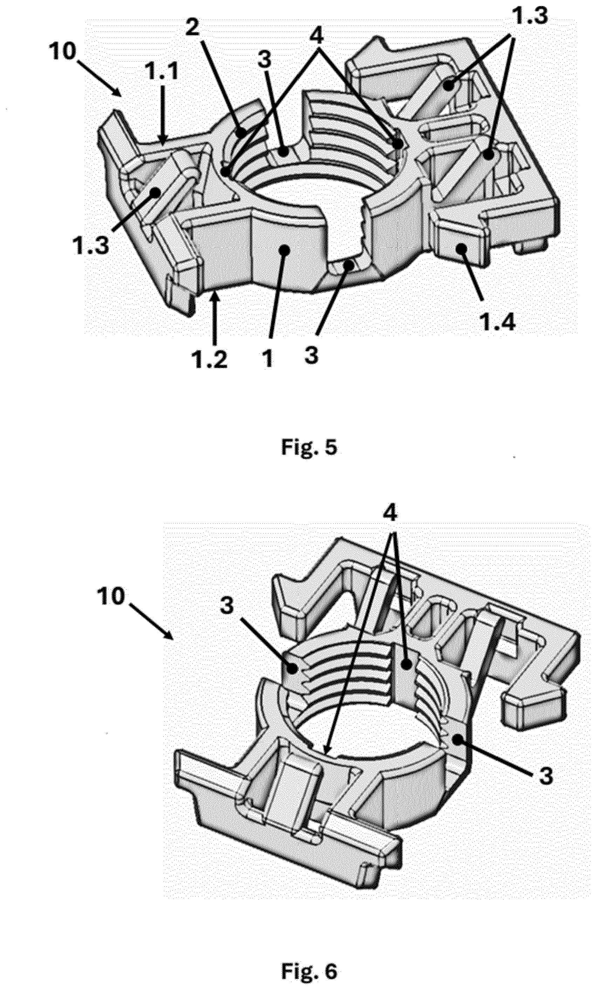

Fig. 5 and Fig 6 depict a new design of a threaded part 10, which is the subject of the present invention. This embodiment discloses the threaded part 10 as an independent element. The body 1 is in form of an insert.

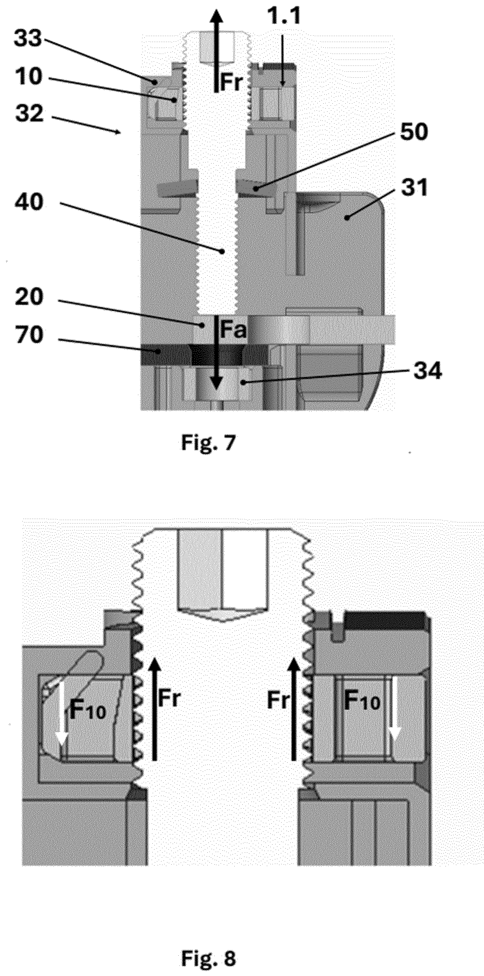

The threaded part 10 is made of plastic. Its body 1 comprises a first side 1.1 and a second side 1.2 opposite to the first side 1.1, a threaded hole 2 extending perpendicularly from the first side 1.1 to the second side 1.2, and one groove 3. The body 1 is configured to fit into the terminal pocket 60 of the contactor 30 while maintaining the first side 1.1 facing the terminal screw 40 (shown in Fig.7). The body 1 comprises expanding elements 1.3 extending beyond the first side 1.1 and configured to expand within the terminal pocket 60, and locking elements 1.4 configured to lock the threaded part 10 in the terminal pocket 60.

The threaded hole 2 is perpendicular to the direction of slide-in into the terminal pocket 60, and it is positioned in the centre of the body 1.

The groove 3 extends from the first side 1.1 toward the second side 1.2 of the body 1 such that a depth of the groove 3 is smaller than a thickness of the body 1 and the groove 3 extends over a thread of the threaded hole 2.

The groove 3 is aligned symmetrically with the threaded hole 2 and it is generally in the middle of the length of the body 1.

The depth of the groove 3 is greater than 50% of the thickness of the body 1. The significant difference in the thickness of the component means that the threaded part 10 bends under mounting forces in the area below the groove 3.

The threaded hole 2 comprises two recesses 4 along its length, positioned on opposite sides of the threaded hole 2 and oriented 90 degrees offset from the groove 3 relative to the threaded hole 2. A depth of recesses 4 is greater than a depth of a thread of the threaded hole 2. In other embodiments (not shown), the recesses 4 may be only in the part of the thread - from the first side 1.1 of the body 1 towards the second side 1.2 of it. It is in this area that the threaded part 10 will tend to clamp most tightly on the terminal screw 40 during operation. Alternatively, instead of recesses 4, additional grooves 3 can be made in this area (not shown).

Fig. 7 depicts a cross section of a faulty assembled screw connecting terminal 32 in the contactor 30 with the misaligned ferrule 20. The contactor 30 (see Fig. 2) comprises an insulating body 31 comprising a cover 33, an operating coil housed in the insulating body 31, means of modular connection of the coil to an external circuit so that the coil may be powered, three pairs of screw connecting terminals 32, wherein the screw connecting terminal 32 comprises the terminal screw 40, the fixed contact 70, a spring means 50 (contact lock washer), a nut 34. a threaded part (10) depicted on Fig. 5 and Fig 6.

The threaded part 10 is positioned in the terminal pocket 60. The body 1 is configured to fit into the terminal pocket 60, and the threaded hole 2 is oriented perpendicular to the direction in which the threaded part 10 slides into the terminal pocket 60.

In other embodiments not shown, the threaded part can be molded into an insulation body 31, or the cover 33 of it. It may also be a single part with one of these components.

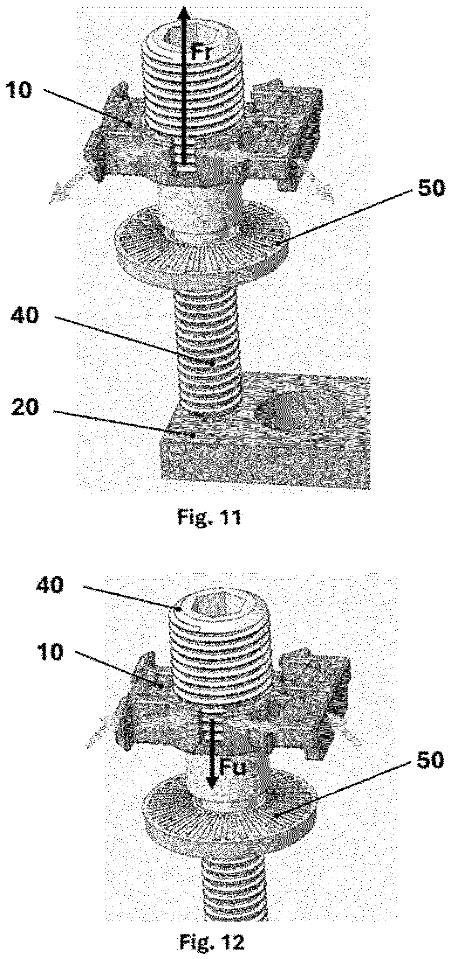

During installation process the terminal screw 40 presses against the ferrule 20 - arrow Fa illustrates the application and direction of an action force on the terminal screw 40. An arrow Fr indicates the direction of a reaction force, which represents the total force exerted by the terminal screw 40 on the threaded part 10 through the threaded connection. As a result of the reaction force, contorting forces resulting from the pressure of the expanding elements 1.3 on the terminal pocket 60 also begin to act on the threaded part 10 - the direction and approximate point of application are indicated by arrows F10 (shown in Fig. 8). The threaded part 10 deforms, as shown by the arrows in Fig. 11. This deformation causes the threaded connection between the elements to loosen, preventing damage to either component in case of incorrect positioning. The recesses 4 help to release the terminal screw 40, when the forces increase. Such deformations of the threaded part 10 are possible in a situation where there is a space left in the terminal pocket 60. Fig. 7 and Fig. 8 shows a simplified drawing - in reality, the expanding elements 1.3 would push the threaded part 10 away from the upper surface of the terminal pocket 60, leaving space for the insert to expand. In other embodiments (not shown) - the space can be preserved with the right terminal pocket 60 profile or expansion elements inside the terminal pocket 60.

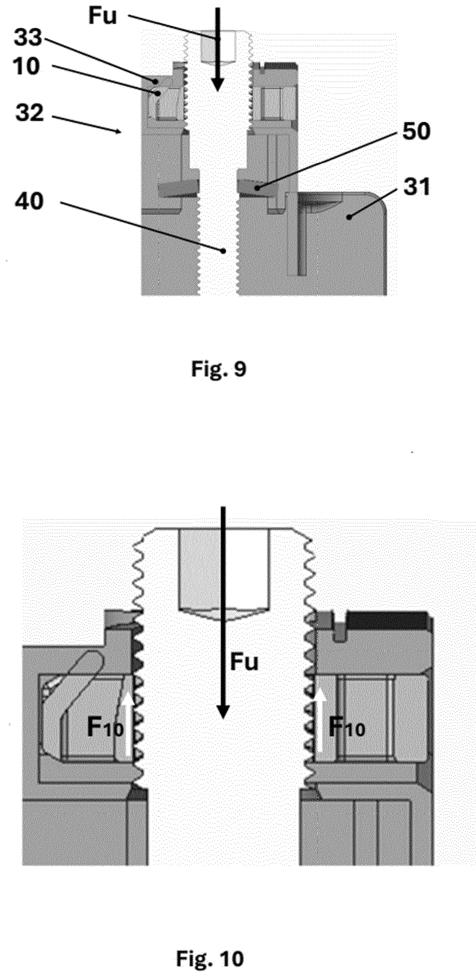

Fig. 9 depicts a cross section of screw connecting terminal 32 in cover 33 during manual process of unscrewing. The arrow Fu indicates the direction of the unscrewing force, which represents the total force exerted by terminal screw 40 on the threaded part 10 through the threaded connection. The threaded part 10 deforms, as indicated by the arrows in Fig. 12. This deformation enhances the insert's grip on the terminal screw 40, thereby increasing the load capacity of the threaded connection.

The ensuing description above provides preferred exemplary embodiment(s) only, and is not intended to limit the scope, applicability, or configuration of the disclosure. Rather, the ensuing description of the preferred exemplary embodiment(s) will provide those skilled in the art with an enabling description for implementing a preferred exemplary embodiment of the disclosure, it being understood that various changes may be made in the function and arrangement of elements, including combinations of features from different embodiments, without departing from the scope of the disclosure.

## Claims

1. A threaded part (10) for use with a contactor terminal screw, comprising:
a body (1) comprising a first side (1.1) and a second side (1.2) opposite to the first side (1.1),
a threaded hole (2) extending perpendicularly through the body (1) from the first side (1.1) to the second side (1.2), and
an at least one groove (3) formed in the body (1),
wherein
the body (1) is configured to fit into a terminal pocket with the first side (1.1) oriented toward the terminal screw, and
the threaded hole (2) oriented toward the terminal screw and
the at least one groove (3) extends from the first side (1.1) toward the second side (1.2) of the body (1) such that a depth of the at least one groove (3) is smaller than a thickness of the body (1) and the at least one groove (3) extends over at least a thread of the threaded hole (2).

2. The threaded part according with claim 1, wherein the at least one groove (3) extends over an entire width of the body (1) crossing the threaded hole (2).

3. The threaded part according with claim 1 or 2, wherein the at least one groove (3) is aligned symmetrically with the threaded hole (2).

4. The threaded part according with claim 1 or 2 or 3, wherein the threaded hole (2) is positioned in the centre of the body (1).

5. The threaded part according with claim 1 or 2 or 3 or 4, wherein the depth of the at least one groove (3) is greater than 50% of the thickness of the body (1).

6. The threaded part according with any of the claims 1 - 5, wherein the threaded hole (2) comprises at least one recess (4) extending from the first side (1.1) toward the second side (1.2) of the body (1) and extends over at least part of a thread of the threaded hole (2).

7. The threaded part according with any of the claims 1 - 6, wherein the body (1) comprises an expanding element (1.3) extending beyond the first side (1.1) of the body (1) and configured to expand within the terminal pocket.

8. The threaded part according with claims 7, wherein two recesses (4) are positioned on opposite sides of the threaded hole (2) such that an angle between the recess (4) and each of the at least one groove (3) is 90 degrees.

9. A contactor (30) comprising:
an insulating body (31) comprising a cover (33),
an operating coil housed in the insulating body (31),
means of modular connection of the coil to an external circuit so that the coil may be powered,
at least a pair of screw connecting terminals (32), and
an at least one screw connecting terminal (32) comprises a terminal screw (40), a fixed contact (70), a threaded part (10) according to any of the claims 1-8,
wherein the threaded part (10) is positioned in the terminal pocket (60)

10. The contactor according with claim 9wherein the threaded part (10) is in form of an insert, and the body (1) is configured to fit into the terminal pocket (60), and the threaded hole (2) is oriented perpendicular to the direction in which the threaded part (10) slides into the terminal pocket (60).

11. The contactor according with claim 9 wherein the threaded part (10) is molded into the terminal pocket (60).

12. The contactor according with claim 9 wherein the cover (33) comprises the terminal pocket (60), and the threaded part (10) is a single part with the cover (33).
